# EUROPÄISCHE PATENTANMELDUNG

(11) **EP 4 571 559 A1**
(43) Veröffentlichungstag der Anmeldung: **18.06.2025**
(21) Anmeldenummer: 23217161.1
(22) Anmeldetag: 15.12.2023
(51) Int. Cl.: G06F 21/64, H04L 9/32, H04L 9/00, H04L 9/40

(54) **SPEICHERN EINES DIGITALEN KALIBRIERZERTIFIKATS IN EINEM VERTEILTEN DATENBANKSYSTEM**

(71) Anmelder: Siemens Aktiengesellschaft, 80333 München (DE)
(72) Erfinder: Tobola, Andreas, 91058 Erlangen (DE)
(74) Vertreter: Siemens Patent Attorneys

(57) **Zusammenfassung**

Die Erfindung betrifft ein Verfahren zum Speichern eines digitalen Kalibrierzertifikats in einem verteilten Datenbanksystem,
mit den Schritten:
- Ein Durchführen (S1) eines Kalibrierens eines Messgeräts, wobei dem Messgerät ein Identifikator zugeordnet ist,
- ein Bereitstellen (S2) eines Kalibrierergebnisses, wobei das Kalibrierergebnisses das Ergebnis des durchgeführten Kalibrierens ist,
- ein Speichern (S3):
o des Kalibrierergebnisses und
o des Identifikators des Messgeräts in dem digitalen Kalibrierzertifikat, und

- ein Speichern (S4) des digitalen Kalibrierzertifikat in dem verteilten Datenbanksystem.

Außerdem betrifft die Erfindung ein zugehöriges Computerprogrammprodukt und ein computerlesbares Medium

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft ein Verfahren zum Speichern eines digitalen Kalibrierzertifikats in einem verteilten Datenbanksystem. Außerdem betrifft die Erfindung ein zugehöriges Computerprogrammprodukt und ein computerlesbares Medium

### Beschreibung des Stands der Technik

Allgemein bezieht sich der Begriff "Kalibrierschein" auf ein Dokument, das Informationen über eine Kalibrierung von einem Messgerät oder einem Messinstrument enthält. In der Regel bezieht sich ein Kalibrierschein auf einen einzelnen Messparameter des zugehörigen Messgeräts oder Messinstrument.

Ein Kalibrierschein enthält normalerweise Informationen wie den Namen des Geräts, den Namen des Kalibrierlabors, das Datum der Kalibrierung, die durchgeführten Tests, die Messergebnisse vor und nach der Kalibrierung und die Unterschrift des zuständigen Technikers oder Ingenieurs.

Kalibrierung ist der Prozess, bei dem die Genauigkeit und Zuverlässigkeit von Messgeräten überprüft und gegebenenfalls durch eine Justierung angepasst werden, um sicherzustellen, dass sie korrekte Messungen liefern. Die Justierung ist ein optionaler Teil der Kalibrierung. Die Genauigkeit und Zuverlässigkeit des Messgeräts werden im Rahmen der Kalibrierung insbesondere durch ein Bestimmen einer Abweichung von Messwerten des Messgeräts von Normwerten gemessen durch ein genormtes Gerät (Referenzmessgerät) festgestellt.

Das Format für den Digitalen Kalibrierschein (engl. Digital Calibration Certificate, kurz DCC) wurde von der Physikalisch Technischen Bundesanstalt (PTB) herausgegeben [https://www.ptb.de/dcc/] und in Kooperation mit zahlreichen Partnern entwickelt. Der DCC ist nicht nur eine digitale Darstellung des bisherigen Kalibrierscheins, sondern ermöglicht außerdem die maschinelle Interpretation der darin enthaltenen Daten und Informationen.

Wird ein DCC von einem Kalibrierlabor ausgestellt, so zielen bisherige Lösungen darauf, diesen an so genannte DCC-Server oder DCC-Hubs zu übermitteln. Diese DCC-Hubs empfangen einen neu erstellten DCC, speichern diesen und stellen ihn bei Bedarf anderen datenverarbeitenden Systemen für die Auswertung und Weiterverarbeitung zur Verfügung.

Durch die bisherige Lösung ergeben sich mehrere Probleme:
- Die Nutzer (in der Regel werden das Maschinen sein) der DCCs müssen auf dem richtigen Server zugreifen, auf dem sich auch der gesuchte DCC befindet. Dazu müssen Listen geführt werden, auf welchem Server welcher DCC liegt. Dieses Problem ist bisher ungelöst.
- Die Konsumenten der DCCs müssen so genannte Revocation-Listen prüfen, die deklarieren, ob ein DCC nicht unter Umständen zurückgezogen wurde. Dazu müssen die Revocation-Listen unter den Server verteilt werden. [GEMIMEG-II - How metrology can go digital [...], Thomas Engel, Published 14 July 2023. Published by IOP Publishing Ltd, Measurement Science and Technology, Volume 34, Number 10, Meas. Sci. Technol. 34 104002, DOI 10.1088/1361-6501/ace468]
Dieses Problem ist bisher nicht ausreichend gelöst.

Die Aufgabe der Erfindung besteht darin, eine Lösung für ein verbessertes Handhaben von Ergebnissen einer Kalibrierung bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Speichern eines digitalen Kalibrierzertifikats in einem verteilten Datenbanksystem,
mit den Schritten:
- Ein Durchführen eines Kalibrierens eines Messgeräts, wobei dem Messgerät ein Identifikator zugeordnet ist,
- ein Bereitstellen eines Kalibrierergebnisses, wobei das Kalibrierergebnisses das Ergebnis des durchgeführten Kalibrierens ist,
- ein Speichern:
   o des Kalibrierergebnisses und
   o des Identifikators des Messgeräts
   in dem digitalen Kalibrierzertifikat, und
- ein Speichern des digitalen Kalibrierzertifikat in dem verteilten Datenbanksystem.

Die hier vorgestellte Lösung verzichtet somit im Vergleich zum Stand der Technik auf zentral verwaltete Server und setzt auf ein verteiltes Datenbanksystem, insbesondere eine Blockchain, welches es ermöglicht das digitale Kalibrierzertifikat (auch den Digitalen Kalibrierschein oder engl. Das Digital Calibration Certificate, kurz DCC) in sicherer Weise zu speichern. Erfindungsgemäß wird ein digitales Kalibrierzertifikat und damit ein Kalibrierergebnis in das verteilte Datenbanksystem gespeichert, insbesondere dem verteilten Datenbanksystem angehängt. Insbesondere erfolgen für das Messgerät wiederholte Kalibrierungen. So werden wiederholt digitale Kalibrierzertifikate erstellt und in dem verteilten Datenbanksystem angehängt.

Kalibrieren ist im Stand der Technik bekannt und wird im Sinne der Erfindung verstanden als der Prozess, bei dem die Genauigkeit und Zuverlässigkeit von Messgeräten überprüft wird. Die Genauigkeit und Zuverlässigkeit des Messgeräts werden im Rahmen der Kalibrierung insbesondere durch ein Bestimmen einer Abweichung von Messwerten des Messgeräts von Normwerten gemessen durch ein genormtes Gerät (Referenzmessgerät) festgestellt.

In einer Weiterbildung der Erfindung umfasst das erfindungsgemäße Verfahren den weiteren Schritt:
- ein Justieren des Messgeräts in Abhängigkeit des Kalibrierergebnisses.

Das Justieren ist im Stand der Technik bekannt und wird im Sinne der Erfindung verstanden als ein Prozess, bei dem die Genauigkeit und Zuverlässigkeit von Messgeräten angepasst werden, um Genauigkeit der Messungen zu erhöhen.

In einer weiteren Weiterbildung der Erfindung umfasst das erfindungsgemäße Verfahren die weiteren Schritte:
- ein Wiederholen der Schritte des Verfahrens des unabhängigen Verfahrensanspruchs nach dem Justieren des Messgeräts.

Nach dieser Ausführungsform werden nach dem Justieren die Schritte des Kalibrierens wiederholt. So kann der Effekt und gegeben falls ein Erfolg des Justierens überprüft werden.

In einer weiteren Weiterbildung der Erfindung umfasst das erfindungsgemäße Verfahren die weiteren Schritte:
- ein Wiederholen der Schritte des erfindungsgemäßen Verfahrens des unabhängigen Verfahrensanspruchs in definierten zeitlichen Abständen.

Die definierten zeitlichen Abstände sind insbesondere periodische zeitliche Abschnitte, insbesondere von Tagen, Wochen, Monaten oder Jahren.

In einer weiteren Weiterbildung der Erfindung
5. Verfahren nach einem der vorhergehenden Ansprüche,
wobei in dem digitalen Kalibrierzertifikat außerdem gespeichert wird:
- eine Angabe eines Zeitpunkts des Durchführens des Kalibrierens, und/oder
- ein Name eines Kalibrierlabors, welches für die Kalibrierung verantwortlich ist, und/oder
- eine Angabe zu einem durchgeführten Test im Rahmen des Kalibrierens, und/oder
- eine Angabe zu einem verwendeten Norm-/Referenzmessgerät und/oder
- eine digitale Signatur, insbesondere eines das Kalibrieren durchführenden Technikers.

In einer weiteren Weiterbildung der Erfindung
6. Verfahren nach einem der vorhergehenden Ansprüche,
wobei das Kalibrierergebnis umfasst:
- eine Angabe zu einem kalibrierten Messparameter und/oder
- eine festgestellte Abweichung von einem Norm-/Referenzwert und einem durch das Messgerät gemessenen Messwert.

Der kalibrierte Messparameter ist insbesondere ausgebildet als:
- eine Temperatur, und/oder
- eine Vibration, und/oder
- eine Geschwindigkeit, und/oder
- eine Beschleunigung, und/oder
- eine Spannung und/oder
- eine Stromstärke und/oder
- eine Lichtintensität und/oder
- eine Luftfeuchte.

In einer weiteren Weiterbildung der Erfindung ist das verteilte Datenbanksystem ausgebildet als:
- eine Blockchain, und/oder
- ein dezentrales Speichernetzwerk und/oder
- ein Peer-to-Peer-Netzwerk und/oder
- ein dezentrales Datenbanknetzwerk.

In einer weiteren Weiterbildung der Erfindung umfasst das erfindungsgemäße Verfahren den weiteren Schritt:
- ein kryptographisches Verschlüsseln des digitalen Kalibrierzertifikat, wobei das Speichern des digitalen Kalibrierzertifikat in dem verteilten Datenbanksystem in kryptographisch verschlüsselter Form erfolgt.

Nach dieser Ausführungsform wird ein digitales Kalibrierzertifikat in einfacher oder in mehrfacher Ausführung mittels einem oder mehrerer öffentlicher kryptographischer Schlüssel in dem verteilten Datenbanksystem gespeichert.

Diese Option ermöglicht es den Zugang auf Inhalte des digitalen Kalibrierzertifikat einzuschränken, insbesondere um Geschäftsgeheimnisse, vertrauliche Informationen oder andere Anliegen nicht öffentlich in der Blockchain zu hinterlegen. Das kryptographische Verschlüsseln erfolgt insbesondere im Kalibrierlabor über eine von dem Empfänger, in der Regel ein technisches automatisiertes System, beauftragte digitale Kalibrieranfrage (engl. "Digital Calibration Request" kurz "DCR"), in welcher der eine oder die öffentlichen kryptographischen Schlüssel für die Verschlüsselung hinterlegt sind.

In einer weiteren Weiterbildung der Erfindung umfasst das erfindungsgemäße Verfahren die weiteren Schritte:
- ein Empfangen einer Anfrage bezüglich des digitalen Kalibrierzertifikats,
- ein Abrufen des digitalen Kalibrierzertifikats aus dem verteilten Datenbanksystem, und
- ein Bereitstellen des digitalen Kalibrierzertifikats.

Diese Ausführungsform, betrifft den Anwendungsfall, dass ein DCC-Nutzer, in der Regel ein Kunde und ein Nutzer eines technischen automatisierten Systems, die Kalibrierinformation für ein bestimmtes Messgerät, insbesondere einen Sensor, benötigt und diese anfragt. Dazu ist der DCC-Nutzer an das verteilten Datenbanksystem Blockchain angebunden und kann dieses Durchsuchen.

Ist das DCC im Klartext angehängt, so kann dieser direkt genutzt werden. Ist das DCC kryptographisch verschlüsselt, so muss es mit einem der zugehörigen privaten kryptographischen Schlüssel des Nutzers entschlüsselt werden.

In einer weiteren Weiterbildung der Erfindung ist das Messgerät ausgebildet als:
- ein Messinstrument und/oder
- ein Sensor.

In einer weiteren Weiterbildung der Erfindung wird in dem digitalen Kalibrierzertifikat außerdem gespeichert:
- eine Angabe zu einer Revokation.

Die Revokation, auch Widerruf, stellt das seltene Problem dar, indem ein Kalibrierlabor einen Fehler bei der Kalibrierung, insbesondere des Norm-/Referenzmessgeräts, feststellt, so dass ein Kalibrierergebnis für ungültig erklärt wird.

Die Information bezüglich des Fehlers sollte zum Nutzer gelangen. Hierzu sieht der bisherige dezentrale Ansatz nach dem Stand der Technik vor, die Revokation durch das Kalibrierlabor, welches zuvor den DCC ausgestellt hat, anzustoßen.

Nach dieser Ausführungsform dieser Erfindung veröffentlicht das Kalibrierlabor ein Dokument, welches identisch, das heißt auf dieselbe Art, wie der Kalibrierschein an das verteilte Datenbanksystem, insbesondere die Blockchain, gehängt wird, dessen Inhalte jedoch deklarieren, dass der letzte DCC aufgrund einer zugrundeliegenden Störung für ungültig erklärt wurde. Dadurch entsteht ein Rückbezug auf den vorherigen Kalibrierschein. Da ein Nutzer im häufigsten Regelfall am neusten DCC-Dokument interessiert ist, wird dieser das Revocation Dokument erhalten, welches deklariert, dass ein DCC für ungültig erklärt worden ist.

In einer weiteren Weiterbildung der Erfindung wird in dem digitalen Kalibrierzertifikat außerdem gespeichert:
- ein Rückbezug der Revokation auf ein früheres Kalibrierergebnis.

Dadurch wird ein direkter Bezug zu dem früheren Kalibrierergebnis, auf welches sich die Revokation bezieht und damit den Fehler bei der Kalibrierung hergestellt.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

### KURZE BESCHREIBUNG DER ZEICHNUNGEN

Die Besonderheiten und Vorteile der Erfindung werden aus den nachfolgenden Erläuterungen mehrerer Ausführungsoptionen anhand der schematischen Zeichnung ersichtlich.

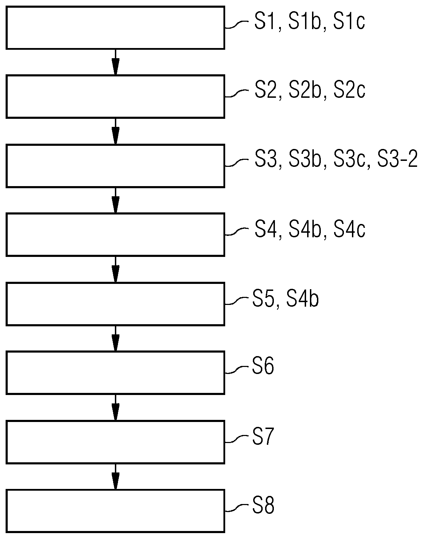

Es zeigt
- Fig. 1: ein Ablaufdiagramm des erfindungsgemäßen Verfahrens.

### DETAILLIERTE BESCHREIBUNG DER ERFINDUNG

Fig. 1 zeigt ein Ablaufdiagramm des erfindungsgemäßen Verfahrens zum Speichern eines digitalen Kalibrierzertifikats in einem verteilten Datenbanksystem,
mit den Schritten:
- Schritt S1: Ein Durchführen eines Kalibrierens eines Messgeräts, wobei dem Messgerät ein Identifikator zugeordnet ist,
- Schritt S2: Bereitstellen eines Kalibrierergebnisses, wobei das Kalibrierergebnisses das Ergebnis des durchgeführten Kalibrierens ist,
- Schritt S3: Speichern:
   o des Kalibrierergebnisses und
   o des Identifikators des Messgeräts
   in dem digitalen Kalibrierzertifikat, und
- Schritt S4: Speichern des digitalen Kalibrierzertifikat in dem verteilten Datenbanksystem.

Außerdem sind weiter optional Schritte gezeigt:
- Schritt S5: Justieren des Messgeräts in Abhängigkeit des Kalibrierergebnisses.
- Schritt S1c-S4c: Wiederholen der Schritte S1-S4 nach dem Justieren (S5) des Messgeräts.
- Schritt S1b-S4b bzw. S1b-S5b: Wiederholen der Schritte S1-S4 bzw. S1-S5 in definierten zeitlichen Abständen.
- Schritt S3-2: kryptographisches Verschlüsseln des digitalen Kalibrierzertifikat, wobei das Speichern des digitalen Kalibrierzertifikat in dem verteilten Datenbanksystem in kryptographisch verschlüsselter Form erfolgt.
- Schritt S6: Empfangen einer Anfrage bezüglich des digitalen Kalibrierzertifikats,
- Schritt S7: Abrufen des digitalen Kalibrierzertifikats aus dem verteilten Datenbanksystem, und
- Schritt S8: Bereitstellen des digitalen Kalibrierzertifikats.

Das Justieren ist ein Prozess, bei dem die Genauigkeit und Zuverlässigkeit von Messgeräten angepasst werden, um sicherzustellen, dass sie korrekte Messungen liefern.

Nach dem Justieren werden die Schritte des Kalibrierens insbesondere wiederholt. So kann der Effekt und gegeben falls ein Erfolg des Justierens überprüft werden.

Das digitales Kalibrierzertifikat wird insbesondere in einfacher oder in mehrfacher Ausführung mittels einem oder mehrerer öffentlicher kryptographischer Schlüssel in dem verteilten Datenbanksystem gespeichert.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Speichern eines digitalen Kalibrierzertifikats in einem verteilten Datenbanksystem,
mit den Schritten:
- Ein Durchführen (S1) eines Kalibrierens eines Messgeräts, wobei dem Messgerät ein Identifikator zugeordnet ist,
- ein Bereitstellen (S2) eines Kalibrierergebnisses, wobei das Kalibrierergebnisses das Ergebnis des durchgeführten Kalibrierens ist,
- ein Speichern (S3):
o des Kalibrierergebnisses und
o des Identifikators des Messgeräts
in dem digitalen Kalibrierzertifikat, und
- ein Speichern (S4) des digitalen Kalibrierzertifikat in dem verteilten Datenbanksystem.

2. Verfahren nach Anspruch 1,
mit dem weiteren Schritt:
- ein Justieren (S5) des Messgeräts in Abhängigkeit des Kalibrierergebnisses.

3. Verfahren nach Anspruch 2,
mit den weiteren Schritten:
- ein Wiederholen (S1c-S4c) der Schritte des Verfahrens nach Anspruch 1 nach dem Justieren (S5) des Messgeräts.

4. Verfahren nach einem der vorhergehenden Ansprüche,
mit den weiteren Schritten:
- ein Wiederholen (S1b-S4b bzw. S1b-S5b) der Schritte des Verfahrens nach Anspruch 1 in definierten zeitlichen Abständen.

5. Verfahren nach einem der vorhergehenden Ansprüche,
wobei in dem digitalen Kalibrierzertifikat außerdem gespeichert wird:
- eine Angabe eines Zeitpunkts des Durchführens des Kalibrierens, und/oder
- ein Name eines Kalibrierlabors, welches für die Kalibrierung verantwortlich ist, und/oder
- eine Angabe zu einem durchgeführten Test im Rahmen des Kalibrierens, und/oder
- eine Angabe zu einem verwendeten Norm-/Referenzmessgerät und/oder
- eine digitale Signatur, insbesondere eines das Kalibrieren durchführenden Technikers.

6. Verfahren nach einem der vorhergehenden Ansprüche, wobei das Kalibrierergebnis umfasst:
- eine Angabe zu einem kalibrierten Messparameter und/oder
- eine festgestellte Abweichung von einem Norm-/Referenzwert und einem durch das Messgerät gemessenen Messwert.

7. Verfahren nach einem der vorhergehenden Ansprüche, wobei das verteilte Datenbanksystem ausgebildet ist als:
- eine Blockchain, und/oder
- ein dezentrales Speichernetzwerk und/oder
- ein Peer-to-Peer-Netzwerk und/oder
- ein dezentrales Datenbanknetzwerk.

8. Verfahren nach einem der vorhergehenden Ansprüche,
mit dem weiteren Schritt (S3-2):
- ein kryptographisches Verschlüsseln des digitalen Kalibrierzertifikat, wobei das Speichern des digitalen Kalibrierzertifikat in dem verteilten Datenbanksystem in kryptographisch verschlüsselter Form erfolgt.

9. Verfahren nach einem der vorhergehenden Ansprüche,
mit den weiteren Schritten:
- ein Empfangen (S6) einer Anfrage bezüglich des digitalen Kalibrierzertifikats,
- ein Abrufen (S7) des digitalen Kalibrierzertifikats aus dem verteilten Datenbanksystem, und
- ein Bereitstellen (S8) des digitalen Kalibrierzertifikats.

10. Verfahren nach einem der vorhergehenden Ansprüche,
wobei das Messgerät ausgebildet ist als:
- ein Messinstrument und/oder
- ein Sensor.

11. Verfahren nach einem der vorhergehenden Ansprüche,
wobei in dem digitalen Kalibrierzertifikat außerdem gespeichert wird:
- eine Angabe zu einer Revokation.

12. Verfahren nach Anspruch 11,
wobei in dem digitalen Kalibrierzertifikat außerdem gespeichert wird:
- ein Rückbezug der Revokation auf ein früheres Kalibrierergebnis.

13. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 12 ausgeführt werden, wenn das Computerprogramm auf der Recheneinheit ausgeführt wird.

14. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 12 ausgeführt werden, wenn das Computerprogramm auf der Recheneinheit ausgeführt wird.
